# EUROPÄISCHE PATENTSCHRIFT

(11) **EP 0 625 365 B1**
(45) Veröffentlichungstag und Bekanntmachung des Hinweises auf die Patenterteilung: **18.09.1996**
(21) Anmeldenummer: 94103653.5
(22) Anmeldetag: 10.03.1994
(51) Int. Cl.: B01D 17/02, B01D 17/032

(54) **Abscheider für Fluide**
Separator for fluids
Séparateur pour fluides

(30) Priorität: 20.03.1993 DE 9304148 U
(43) Veröffentlichungstag der Anmeldung: 23.11.1994
(73) Patentinhaber: WEINZIERL GMBH & Co. KIES UND BETON KG, D-85053 Ingolstadt (DE)
(72) Erfinder: Burger, Franz, D-85049 Ingolstadt (DE); Ostermeier, Walter, D-85053 Ingolstadt (DE)
(74) Vertreter: Ernicke, Hans-Dieter, Dipl.-Ing.

(56) Entgegenhaltungen:
- EP-A- 0 329 374
- DE-A- 3 612 288

## Beschreibung

Die Erfindung betrifft einen Abscheider für Fluide, insbesondere für Benzin, Öl und Abwässer mit den Merkmalen im Oberbegriff des Hauptanspruchs.

Derartige Abscheider, die die Fluide im wesentlichen nach dem Schwerkraftprinzip trennen, sind aus der Praxis bekannt. Wenn der Abscheider gefüllt ist, muß er durch einen Tankwagen oder dergleichen über eine Entnahmeöffnung entleert werden. Üblicherweise wird dazu der gesamte Inhalt der Sammelkammer abgesaugt, was erhebliche Kosten verursacht. Mit den abgeschiedenen mineralischen Leichtflüssigkeiten wird auch ein großer Teil des gereinigten Wassers entnommen. Hierfür müssen unnützerweise Entsorgungskosten bezahlt werden.

Es ist Aufgabe der vorliegenden Erfindung, eine wirtschaftlichere Möglichkeit für die Entleerung eines Abscheiders aufzuzeigen.

Die Erfindung löst diese Aufgabe mit den Merkmalen im Hauptanspruch.
Der erfindungsgemäße Abscheider besitzt eine Begrenzungseinrichtung, die die Eintauchtiefe des Entnahmeelementes, z.B. eines Saugrüssels, begrenzt. Dadurch wird beim Entleeren des Abscheiders im wesentlichen nur die abgeschiedene und oben schwimmende Leichtflüssigkeit abgepumpt. Das gereinigte Fluid, üblicherweise Wasser, bleibt hingegen im Abscheider. Die Entnahmemengen werden hierdurch wesentlich reduziert und die Kosten entsprechend gesenkt. Außerdem muß nur noch das problematische Fluid entsorgt werden.

Die Begrenzungseinrichtung kann eine unterschiedliche Ausbildung und Funktion haben. In der einen Ausführungsform registriert sie lediglich die Höhenlage der Trennlinie zwischen den Fluiden und die Eintauchtiefe des Entnahmeelementes, um dann ein entsprechendes Signal über eine geeignete Steuerung abzusetzen. Dem Bediener wird dadurch mitgeteilt, daß die gewünschte Eintauchtiefe des Entnahmeelementes erreicht ist. Der Bediener kann sich danach richten, muß dies aber nicht tun. In der bevorzugten Ausführungsform sorgt die Begrenzungseinrichtung dafür, daß das Entnahmeelement nicht weiter als bis in den Bereich der Trennlinie vorgeschoben werden kann. Hierdurch ist sichergestellt, daß im wesentlichen nur das zu entsorgende leichtere Fluid entnommen wird.

Die Begrenzungseinrichtung kann in Einzelelementen an bestehenden Abscheidern nachgerüstet werden. Sie kann auch zu einer kompletten Entleerungsvorrichtung mit Zwangsführung für das Entnahmeelement ausgebaut sein, die in neue Abscheider eingebaut oder ebenfalls nachgerüstet werden kann.

Die Höhenlage der Trennlinie und die Eintauchtiefe des Entnahmeelementes können auf unterschiedliche Weise und unter Ausnutzung verschiedener physikalischer Effekte festgestellt werden. In der bevorzugten Ausführungsform weisen sowohl die passive, wie die aktive Begrenzungseinrichtung einen im Bereich der Trennlinie schwebenden Anschlag für das Entnahmeelement auf. Dieser Anschlag kann einerseits auf Berührung durch das Entnahmeelement ansprechen und nachgeben. Hierdurch wird ein Meldesignal von einer entsprechenden, die Bewegung registrierenden Vorrichtung abgesetzt.

In der bevorzugten Ausführungsform wird der im Bereich der Trennlinie schwebende Anschlag als Stopper für das Entnahmeelement benutzt. Er kann als Bestandteil der Entleerungsvorrichtung in einer fluiddurchlässigen Führung angeordnet und mit einer Fixiereinrichtung im Bereich der Trennlinie festgehalten werden. Besonders günstig ist es, wenn die Fixiereinrichtung bei einer Entleerung zwangsbetätigt wird. Manipulationen sind dadurch ausgeschlossen.

Der erfindungsgemäße Abscheider eignet sich für alle Arten von Fluiden, die im wesentlichen durch Schwerkraft voneinander geschieden werden und die eine erfaßbare Trennlinie besitzen. Der bevorzugte und übliche Einsatzbereich sind Benzin- und Ölabscheider in Kfz-Betrieben, Tankstellen, Autowaschanlagen etc.

In der Unteransprüchen sind vorteilhafte Ausgestaltungen der Erfindung angegeben.

Die Erfindung ist in den Zeichnungen beispielsweise und schematisch dargestellt. Im einzelnen zeigen:
- Fig. 1:: in einer aufgeschnittenen schematischen Seitenansicht Abscheider in zwei verschiedenen Ausführungsformen,
- Fig. 2:: eine Begrenzungseinrichtung im Längsschnitt und vergrößerter Darstellung und
- Fig. 3:: eine Draufsicht auf den Deckel der Entnahmeöffnung entsprechend Pfeil III von Fig. 2.

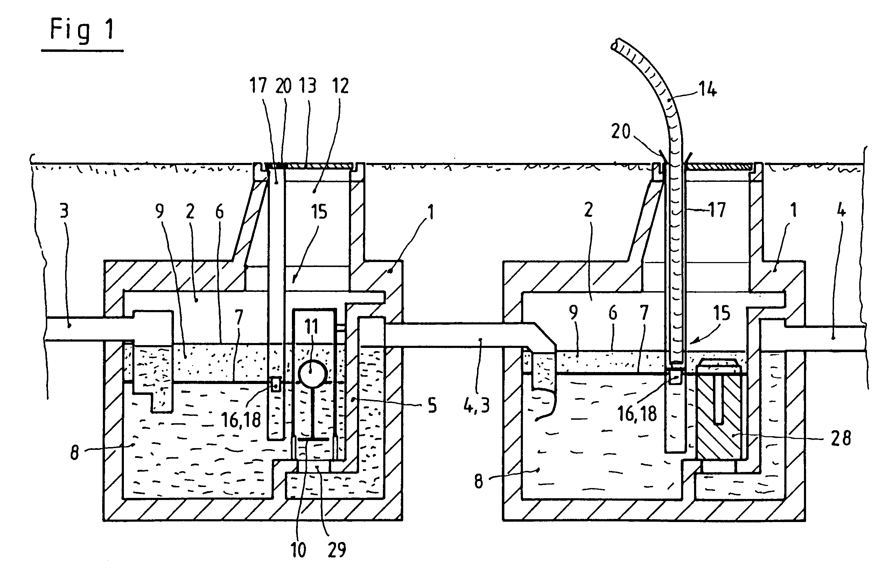

Fig. 1 zeigt im Querschnitt zwei Abscheider (1) für Fluide (8,9), die sich durch Schwerkraft voneinander scheiden, wobei eine mehr oder weniger deutliche Trennlinie (7) entsteht. Die leichteren und nach oben steigenden Fluide (9) sind beispielsweise mineralische Leichtflüssigkeiten, wie Benzin, Diesel- und Heizöl, Motoröl, Filteröl etc. Das schwerere Fluid (8) besteht üblicherweise aus Wasser. Derartige Abscheider können aber auch für andere flüssige und/oder gasförmige Fluide eingesetzt werden.

Die Abscheider (1) haben einen Sammeltank (2), in den durch einen Zulauf (3) das Fluidgemisch, beispielsweise in Form von Abwasser, Regenwasser oder Schmutzwasser eingeleitet wird. Der Zulauf (3) hat vorzugsweise einen nach unten ragenden Austrittsstutzen, dessen Auslaßöffnung sich unterhalb der Trennlinie (7) befindet.

Die Abscheider (1) verfügen über eine Trennkammer mit einer abgewinkelten Tauchwand (5), die eine Zulauföffnung (29) im Bodenbereich des Abscheiders (1) aufweist. Hinter der Tauchwand (5) kann das schwerere und gereinigte Fluid (8) zu einem Ablauf (4) gelangen.

Im linken Abscheider (1) ist über der Zulauföffnung (29) der Tauchwand (5) ein Sicherheitsverschluß (10) mit einem Schwimmer (11) angeordnet. Der Schwimmer schwebt im Bereich der Trennlinie (7) und verschließt bei einem zu weiten Absenken der Trennlinie (7) die Zulauföffnung (29) in der Tauchwand (5).

Der Ablauf (4) des ersten Abscheiders (1) bildet zugleich den Zulauf (3) des zweiten Abscheiders (1). Dieser hat anstelle oder zusätzlich zum vorerwähnten Sicherheitsverschluß (10) einen Koaleszenzabscheider (28). Durch Adsorption und Koaleszenz werden die im Wasser (8) noch verbliebenen feinsten Tröpfchen des leichteren Fluids (9) zu größeren Tropfen kummuliert, die dann genug Auftrieb für die Schwerkraftabscheidung haben.

Die beiden Abscheider (1) haben an der Oberseite jeweils eine Entnahmeöffnung (12), die durch einen Deckel (13), beispielsweise in Form eines Rostes, verschlossen sind. Zur Entleerung des Abscheiders (1) kann in die Entnahmeöffnung (12) ein Entnahmeelement (14), beispielsweise ein Saugrüssel, eingeführt werden, über den der Inhalt des Sammeltanks (2) abgepumpt und entsorgt werden kann.

Zur Begrenzung der Eintauchtiefe des Saugrüssels (14) besitzt jeder Abscheider (1) eine Begrenzungseinrichtung (15). In der bevorzugten Ausführungsform ist die Begrenzungseinrichtung (15) als komplette Entleerungsvorrichtung ausgebildet, die als Baugruppe in den Abscheider (1) integriert oder als selbständige Anordnung getrennt hergestellt und vertrieben werden kann.

Die Begrenzungseinrichtung (15) weist eine in der Entnahmeöffnung (12) angeordnete rohrförmige Führung (17) für das Entnahmeelement (14) auf, die sich vom Deckel (13) aus nach unten in den Sammeltank (2) erstreckt. Durch eine geeignete Deckelgestaltung ist sichergestellt, daß das Entnahmeelement (14) im Normalfall nur durch die Führung (17) in den Sammeltank (1) gelangen kann. Die Führung (17) reicht vorzugsweise bis unterhalb der tiefstmöglichen Höhenstellung der Trennlinie (7). Die Führung (17) ist als fluiddurchlässiger, rohrförmiger Käfig oder Korb ausgebildet. Im gezeigten Ausführungsbeispiel besteht die Führung (17) aus einem bodenseitig geschlossenen Stangenkäfig, bei dem die längslaufenden Stangen mit Abstand zwischen sich in einem Kreis angeordnet sind.

In der Führung (17) ist ein im Bereich der Trennlinie (7) schwebender Anschlag (16) angeordnet, der auf den Saugrüssel (14) anspricht oder auf diesen einwirkt. Im gezeigten Ausführungsbeispiel läßt sich der Anschlag (16) fixieren und wirkt als körperlicher Anschlag oder Stop für den Saugrüssel (14), der in der Führung (17) nur bis zum Anschlag (16) vorgeschoben werden kann. Dadurch kann im wesentlichen nur das leichtere Fluid (9) entnommen und abgesaugt werden. Das schwerere Fluid (8) bleibt im Sammeltank (2). Für Reinigungszwecke, Wartungs- und Inspektionsarbeiten etc. kann eine separate Entleerungsmöglichkeit zum Abpumpen des kompletten Tankinhalts vorgesehen sein.

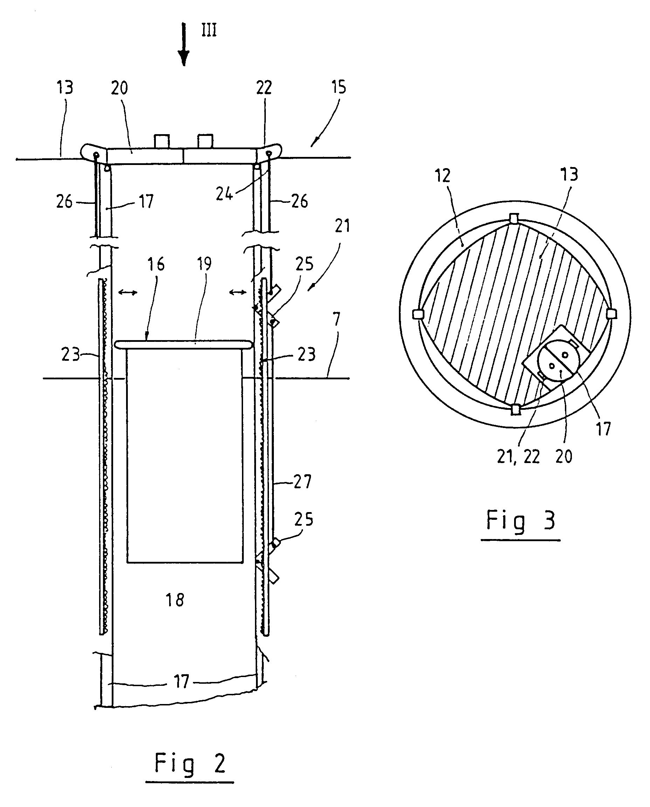

Wie Fig. 2 und 3 verdeutlichen, ist der Anschlag (16) als Schwebkörper (18) oder Schwimmer ausgebildet, der an der Oberseite eine breitere Kopfplatte (19) trägt, die im wesentlichen dem Querschnitt der Führung (17) entspricht. Der Schwebkörper (18) ist in seiner Wichte so austariert, daß er mit der Kopfplatte (19) in Höhe oder ein kleines Stück ober- oder unterhalb der Trennlinie (7) schwimmt. Je nach gewünschter Eintauchtiefe des Saugrüssels (14) bezüglich der Trennlinie (7) kann der Schwebkörper (18) auch anders ausgelegt sein.

Die Begrenzungsvorrichtung (15) besitzt eine Fixiervorrichtung (21), die den Schwebkörper (18) im Bereich der Trennlinie (7) festhalten kann. Zur Aktivierung der Fixiervorrichtung (21) ist eine Betätigungsvorrichtung (22) vorgesehen, die vorzugsweise auf den Zutritt des Entnahmerüssels (14) anspricht. Im gezeigten Ausführungsbeispiel besitzt die Führung (17) an der Eingangsseite einen Verschluß (20) in Form eines Klappdeckels. Im Deckel (13) der Entnahmeöffnung (12) ist hierfür eine entsprechende Aussparung vorgesehen.

Die Betätigungsvorrichtung (22) ist mit dem Verschluß (20) gekoppelt, wodurch die Fixiervorrichtung (21) bei jedem Öffnen des Verschlusses (20) selbsttätig aktiviert wird.

Die Fixiervorrichtung (21) besteht beispielsweise aus zwei Spannleisten (23), die sich längs der Führung (17) erstrecken und durch deren Wandung, d.h. zwischen den Käfigstangen, seitlich hindurchtreten können. Die Spannleisten (23) sind beispielsweise als Zahnstangen ausgebildet und klemmen den Schwebkörper (18) zwischen sich fest. Sie greifen hierzu vorzugsweise an der Kopfplatte (19) an. Die Spannleisten (23) haben eine ausreichende Länge, um alle Schwebstellungen des Schwebkörpers (18) erfassen zu können.

Die Betätigungsvorrichtung (22) besteht aus einem Hebeltrieb (24). Die Spannleisten (23) sind jeweils an ein oder mehreren Schwenkhebeln (25) angeordnet. Die Schwenkhebel (25) sind ihrerseits an der Führung (17) gelagert. Bei einer mehrfachen Anordnung von Spannleisten (23) und Schwenkhebeln (25) können diese durch Verbindungsstangen (27) gekoppelt sein. Der oberste Schwenkhebel (25) ist über einen Stellhebel (26) mit dem Verschluß (20) verbunden. Beim Aufklappen des Verschlusses (20) werden die Stellhebel (26) nach unten gedrückt, wobei diese Bewegung in eine quergerichtete Spannbewegung der Spannleisten (23) umgesetzt wird.

Für die Begrenzungseinrichtung (15) gibt es verschiedene Variationsmöglichkeiten.

Zum einen kann der Anschlag (16) bzw. der Schwebkörper (18) eine reine Signalfunktion haben. Er kann dann beim Auftreffen des Saugrüssels (14) nach unten ausweichen, wobei diese Bewegung durch eine interne oder externe Sensoranordnung registriert und zum Betreiber des Abscheiders (1) oder dem Bediener des Saugrüssels (14) gemeldet wird.
Alternativ kann die Lage der Trennlinie (7) und die Eintauchtiefe des Saugrüssels (14) auch ohne Anschlag auf andere Weise festgestellt werden, z.B. durch Trübungsmeßgeräte, Leitwertmeßgeräte, optische Sensoren etc.. Auch hier findet vorrangig eine Meldung der Eintauchteife des Saugrüssels (14) und der Höhenlage der Trennlinie (7) statt. Die Begrenzungseinrichtung braucht dazu keine Führung für den Saugrüssel zu haben. Die genannten Meßgeräte nebst geeigneter Steuerung können dann einzeln im Sammeltank (2) eingebaut oder nachgerüstet werden.

Variiert werden kann auch die konstruktive Ausgestaltung der in Fig. 1 bis 3 gezeigten Begrenzungseinrichtung (15). Anstelle der Spannleisten (23) können auch andere Klemm- oder Spannelemente treten, die den Schwimmer (18) in der Führung (17) direkt festhalten oder dessen Absenken vermeiden. Dies können z.B. Ringklemmen sein.

Die Betätigungsvorrichtung (22) kann anstelle des Hebeltriebs (24) auch eine andere Kraftübertragungsvorrichtung aufweisen. Sie muß auch nicht mit dem Verschluß (20) verbunden sein. Alternativ kann beispielsweise in der Führung (17) ein beweglicher Anschlag oder eine Verengung vorhanden sein, die vom eingeführten Saugrüssel (14) verdrängt werden und damit über eine entsprechende Betätigungsvorrichtung (22) die Fixiervorrichtung (21) aktivieren.

Alternativ kann die Führung (17) auch in sich beweglich sein und ihren inneren Durchmesser mit Hilfe einer entsprechenden Betätigungsvorrichtung verändern. In Abwandlung des gezeigten Ausführungsbeispiels stellt die Führung damit zugleich die Fixiervorrichtung dar.

### BEZUGSZEICHENLISTE

- 1: Abscheider
- 2: Sammeltank
- 3: Zulauf
- 4: Ablauf
- 5: Tauchwand
- 6: Spiegel
- 7: Trennlinie
- 8: Fluid, Wasser
- 9: Fluid, Öl, Benzin,
- 10: Sicherheitsverschluß
- 11: Schwimmer
- 12: Entnahmeöffnung
- 13: Deckel
- 14: Entnahmeelement, Saugrüssel
- 15: Begrenzungseinrichtung
- 16: Anschlag
- 17: Führung, Käfig
- 18: Schwebkörper
- 19: Kopfplatte
- 20: Verschluß
- 21: Fixiervorrichtung
- 22: Betätigungsvorrichtung
- 23: Spannleiste, Zahnstange
- 24: Hebeltrieb
- 25: Schwenkhebel
- 26: Stellhebel
- 27: Verbindungsstange
- 28: Koaleszenzabscheider
- 29: Zulauföffnung

## Patentansprüche

1. Abscheider für Fluide, insbesondere für Benzin, Öl und Abwässer, mit einem Sammeltank (2), einer darin angeordneten Trennkammer für das Abfließen des schweren Fluids und mit einer an der Oberseite des Sammeltanks befindlichen Entnahmeöffnung (12) zur Einführung eines Entnahmeelements für das leichte Fluid, dadurch **gekennzeichnet**, daß in der Entnahmeöffnung (12) eine auf die Trennlinie (7) der Fluide (8,9) ansprechende Begrenzungseinrichtung (15) für die Eintauchtiefe des Entnahmeelementes (14) angeordnet ist.

2. Abscheider nach Anspruch 1, dadurch **gekennzeichnet**, daß die Begrenzungseinrichtung (15) einen im Bereich der Trennlinie (7) schwebenden Anschlag (16) für das Entnahmeelement (14) aufweist.

3. Abscheider nach Anspruch 2, dadurch **gekennzeichnet**, daß der Anschlag (16) als signalgebender, ausweichfähiger Anschlag ausgebildet ist, der auf Berührung durch das Entnahmeelement (14) ein Meldesignal absetzt.

4. Abscheider nach Anspruch 2, dadurch **gekennzeichnet**, daß der Anschlag (16) als fixierbarer körperlicher Anschlag für das Entnahmeelement (14) ausgebildet ist.

5. Abscheider nach Anspruch 1, 2 oder 4, dadurch **gekennzeichnet**, daß die Begrenzungseinrichtung (15) eine in den Sammeltank (2) reichende, fluiddurchlässige Führung (16) für das Entnahmeelement (14) mit einem im Bereich der Trennlinie (7) schwebenden Schwebkörper (18) und eine Fixiervorrichtung (21) für den Schwebkörper (18) aufweist.

6. Abscheider nach Anspruch 5, dadurch **gekennzeichnet**, daß die Fixiervorrichtung (21) eine mit dem Zugang der Führung (16) ansprechende Betätigungsvorrichtung (22) aufweist.

7. Abscheider nach Anspruch 6, dadurch **gekennzeichnet**, daß die Führung (16) eingangsseitig einen Verschluß (20) aufweist, der mit der Betätigungsvorrichtung (22) gekoppelt ist.

8. Abscheider nach Anspruch 5 oder einem der folgenden, dadurch **gekennzeichnet**, daß die Führung (16) als rohrförmiger Käfig oder Korb ausgebildet ist.

9. Abscheider nach Anspruch 5 oder einem der folgenden, dadurch **gekennzeichnet**, daß die Fixiervorrichtung (21) mindestens eine in den Führungswänden angeordnete Spannleiste (23) zum Festklemmen des Schwebkörpers (18) aufweist.

10. Abscheider nach Anspruch 7 oder einem der folgenden, dadurch **gekennzeichnet**, daß die Betätigungsvorrichtung (22) einen Hebeltrieb (24) aufweist, der auf der einen Seite mit der Fixiervorrichtung (21) und auf der anderen Seite mit dem Verschluß (20) verbunden ist.

## Claims

1. A separator for fluids, in particular for petrol, oil and waste water, having a collecting tank (2), a dividing chamber arranged therein for draining off the heavy fluid, and a drawing-off opening (12) located on the upper side of the collecting tank for introducing an element for drawing off the light fluid, characterized in that there is arranged in the drawing-off opening (12) a means (15) for delimiting the depth of immersion of the drawing-off element (14), responding to the dividing line (7) between the fluids (8, 9).

2. A separator according to Claim 1, characterized in that the delimiting means (15) has, floating in the region of the dividing line (7), a stop (16) for the drawing-off element (14).

3. A separator according to Claim 2, characterized in that the stop (16) is constructed as a signal-emitting, deflectable stop which transmits a signal on coming into contact with the drawing-off element (14).

4. A separator according to Claim 2, characterized in that the stop (16) is constructed as a fixable, physical stop for the drawing-off element (14).

5. A separator according to Claim 1, 2 or 4, characterized in that the delimiting means (15) has for the drawing-off element (14) a fluid-permeable guide means (17) which reaches into the collecting tank (2) and which has a float (18) floating in the region of the dividing line (7) and a device (21) for fixing the float (18).

6. A separator according to Claim 5, characterized in that the fixing device (21) has an actuating device (22) which responds to closure of the guide means (17).

7. A separator according to Claim 6, characterized in that the guide means (17) has on the entry side a sealing means (20) which is linked to the actuating device (22).

8. A separator according to Claim 5 or one of the following claims, characterized in that the guide means (17) is constructed as a tubular cage or basket.

9. A separator according to Claim 5 or one of the following claims, characterized in that the fixing device (21) has at least one tensioning bar (23) arranged in the walls of the guide means for clamping the float (18).

10. A separator according to Claim 7 or one of the following claims, characterized in that the actuating device (22) has an operating lever (24) which is connected on the one side to the fixing device (21) and on the other side to the sealing means (20).

## Revendications

1. Séparateur de fluides, notamment d'essence, d'huile et d'eau usée, comportant un réservoir (2) collecteur, une chambre de séparation qui y est prévue et qui sert à évacuer le fluide lourd et comportant une ouverture (12) de prélèvement qui se trouve sur la face supérieure du réservoir collecteur et qui sert à introduire un élément de prélèvement du fluide léger, caractérisé en ce qu'il est prévu dans l'ouverture (12) de prélèvement un dispositif (15) de limitation de la profondeur d'immersion de l'élément (14) de prélèvement, qui réagit à l'interface (7) des fluides (8, 9)

2. Séparateur suivant la revendication 1, caractérisé en ce que le dispositif (15) de limitation comporte une butée (16) qui est en suspension dans la région de l'interface (7) et qui est destinée à l'élément (14) de prélèvement.

3. Séparateur suivant la revendication 2, caractérisé en ce que la butée (16) est une butée qui donne un signal, qui peut s'enfoncer et qui transmet un signal d'avertissement lors d'un contact de l'élément (14) de prélèvement.

4. Séparateur suivant la revendication 2, caractérisé en ce que la butée (16) est une butée physique qui est destinée à l'élément (14) de prélèvement et qui peut être immobilisée.

5. Séparateur suivant la revendication 1, 2 ou 4, caractérisé en ce que le dispositif (15) de limitation comporte un dispositif (17) de guidage, qui est perméable aux fluides, qui va au réservoir (2) collecteur, qui est destiné à l'élément (14) de prélèvement et qui comporte un corps (18) qui est en suspension dans la région de l'interface (7), et un dispositif (21) d'immobilisation du corps (18) en suspension.

6. Séparateur suivant la revendication 5, caractérisé en ce que le dispositif (21) d'immobilisation comporte un dispositif (22) d'actionnement réagissant par l'arrivé du dispositif (17) de guidage.

7. Séparateur suivant la revendication 6, caractérisé en ce que le dispositif (17) de guidage comporte côté entrée une fermeture (20) qui est couplée au dispositif (22) d'actionnement.

8. Séparateur suivant la revendication 5 ou une des revendications suivantes, caractérisé en ce que le dispositif (17) de guidage est constitué sous la forme d'une cage ou d'un panier tubulaire.

9. Séparateur suivant la revendication 5 ou une des revendications suivantes, caractérisé en ce que le dispositif (21) d'immobilisation comporte au moins une barre (23) de serrage montée dans les parois du dispositif de guidage pour bloquer le corps (18) en suspension.

10. Séparateur suivant la revendication 7 ou une des revendications suivantes, caractérisé en ce que le dispositif (22) d'actionnement comporte un actionnement (24) à leviers qui est relié d'un côté au dispositif (21) d'immobilisation et de l'autre côté à la fermeture (20).
